# EUROPÄISCHE PATENTSCHRIFT

(11) **EP 1 644 881 B1**
(45) Veröffentlichungstag und Bekanntmachung des Hinweises auf die Patenterteilung: **31.12.2008**
(21) Anmeldenummer: 04740872.9
(22) Anmeldetag: 09.07.2004
(51) Int. Cl.: G06Q 10/00

(54) **VERFAHREN ZUM PROJEKTIEREN UND/ODER KONFIGURIEREN EINES PROJEKTES**
METHOD FOR PROJECTING AND/OR CONFIGURING A PROJECT
PROCEDE POUR EBAUCHER ET/OU CONFIGURER UN PROJET

(30) Priorität: 10.07.2003 DE 10331312
(43) Veröffentlichungstag der Anmeldung: 12.04.2006
(73) Patentinhaber: SIEMENS AKTIENGESELLSCHAFT, 80333 München (DE)
(72) Erfinder: BECK, Hans-Joachim, 76287 Rheinstetten (DE)
(86) Internationale Anmeldenummer: PCT/EP2004/007593
(87) Internationale Veröffentlichungsnummer: WO 2005/006223

(56) Entgegenhaltungen:
- WO-A-02/088909
- US-B1- 6 298 319
- REUTER T ET AL: "PROJEKTIEREN LOEST DAS PROGRAMMIEREN AB" ELEKTRONIK, FRANZIS VERLAG GMBH. MUNCHEN, DE, Bd. 46, Nr. 3, 4. Februar 1997 (1997-02-04), Seiten 58-64, XP000722490 ISSN: 0013-5658
- SIEMENS AG: "Industrial Ethernet" ADVANCE PRODUKTE, SYSTEME, LÖSUNGEN FÜR TOTALLY INTEGRATED AUTOMATION, Bd. 1, Nr. 1/2002, Oktober 2002 (2002-10), XP002305416

## Beschreibung

Die Erfindung betrifft ein Verfahren zum Projektieren und/oder Konfigurieren eines Projektes, welches eine Automatisierungseinrichtung zum Steuern einer technischen Anlage repräsentiert, wobei in einem Speicher eines Engineeringsystems, welcher mit einem Programmiergerät des Engineeringsystems verbunden ist, Projektierungsbausteine in einer Bibliothek hinterlegt sind und wobei Kopien der für die Projektierung und/oder Konfigurierung des Projekts erforderlichen Projektierungsbausteine auf dem Programmiergerät hinterlegbar sind. Darüber hinaus betrifft die Erfindung ein Engineeringsystem zum Projektieren und/oder Konfigurieren eines Projektes.

Ein Engineeringsystem der eingangs genannten Art ist aus dem Siemens-Katalog ST PCS 7, Kapitel 3, Ausgabe Mai 2003 bekannt. Dieses Engineeringsystem ist Bestandteil eines Prozessleitsystems, welches eine technische Anlage steuert, und ist insbesondere vorgesehen zum Konfigurieren von Hard-und/oder Softwarekomponenten, zum Projektieren von Kommunikationsnetzwerken, von kontinuierlichen und sequentiellen Prozessabläufen, ferner zum Design von Bedien- und Beobachtungsstrategien sowie zum Erstellen von Rezepten für Chargen- bzw. Batchprozesse. Die erforderlichen Projektierungsbausteine für die Projektierung und/oder Konfigurierung eines Projektes, welches die zu entwerfende Automatisierungseinrichtung repräsentiert, sind Bestandteile einer Bibliothek, welche in einem Speicher eines Programmiergerätes oder eines Servers hinterlegbar ist, wobei die Programmiergeräte, welche z. B. in einem Multiuser-Betrieb an der Projektierung und/oder Konfigurierung beteiligt sind, auf diese gemeinsame Bibliothek zugreifen können. Die für ein mehrere Teilprojekte umfassendes Projekt benötigten Projektierungsbausteine der zu projektierenden Automatisierungseinrichtung werden in Form von Kopien in den Programmiergeräten abgespeichert, wobei Projektierer die Projektierungsbausteine selbst kopieren müssen. Mit diesen lokal auf den Programmiergeräten hinterlegten Kopien ist es möglich, autark das jeweilige Teilprojekt zu bearbeiten, eine Online-Verbindung mit der Bibliothek des Servers ist zunächst nicht mehr erforderlich. Es kann nun vorkommen, dass die Bibliothek aktualisiert wird, das bedeutet, es werden neue Versionen (Ausgabestände) dieser Projektierungsbausteine in der Bibliothek hinterlegt. In diesem Fall sind die Projektierer dafür verantwortlich, erneut entsprechende Kopien dieser neuen Ausgabestände in den Programmiergeräten zu hinterlegen. Diese Vorgehensweise ist fehleranfällig und mit einem hohen Arbeitsaufwand für die Hantierung der Projektierungsbausteine verbunden.

Der vorliegenden Erfindung legt die Aufgabe zugrunde, ein Verfahren zum Projektieren und/oder Konfigurieren eines Projektes der eingangs genannten Art zu vereinfachen. Darüber hinaus ist ein Engineeringsystem und ein Programmiergerät für ein derartiges Engineeringsystem anzugeben, welches die Projektierung und/oder Konfigurierung eines Projektes erleichtert.

Diese Aufgabe wird im Hinblick auf das Verfahren dadurch gelöst, dass Verweise abgespeichert werden, die anzeigen, welche Projektierungsbausteine zu kopieren sind, und dass gemäß den Verweisen die Projektierungsbausteine automatisch kopiert und auf dem Programmiergerät hinterlegt werden. Im Hinblick auf das Engineeringsystem wird die Aufgabe durch die im kennzeichnenden Teil des Anspruchs 5 angegebenen Maßnahmen gelöst.

Vorteilhaft ist, dass ein Projektierer in einem Projekt lediglich Verweise hinterlegen muss, die Kopien der Projektierungsbausteine werden automatisch erstellt und im Projekt auf dem Programmiergerät hinterlegt. Die Fehleranfälligkeit und der Projektierungsaufwand wird dadurch vermindert.

In einer Ausgestaltung der Erfindung gemäß der im Anspruch 2 angegebenen Maßnahmen können bereits in einem Projekt abgespeicherte Kopien bei Bedarf durch Kopien aktualisiert werden, wobei eine Aktualisierung nur aufgrund einer Benutzeranforderung bewirkt wird. Dadurch ist es einerseits möglich, das Projekt mit aktuellen Projektierungsbausteinen zu versorgen, andererseits kann dadurch verhindert werden, dass beispielsweise Teile eines Projektes, die bereits zertifiziert sind, aktualisiert werden. Eine Aktualisierung würde im letztgenannten Fall eine neue Zertifizierung dieser Teilprojekte erforderlich machen.

In einer weiteren Ausgestaltung der Erfindung gemäß der im Anspruch 3 angegebenen Maßnahmen kann verhindert werden, dass bereits vorhandene Kopien in einem Projekt versehentlich aktualisiert werden. Angenommen eine bereits projektierte und zertifizierte Automatisierungseinrichtung ist zu erweitern. In diesem Fall werden vorteilhaft die Verweise zu Projektierungsbausteinen der Bibliothek gelöscht, die Bestandteil des bereits zertifizierten Projekts sind. Dagegen werden Verweise zu Projektierungsbausteinen der Bibliothek, die im Rahmen der Erweiterung erforderlich sind, nicht gelöscht, um für diese Erweiterung aktuelle Projektierungsbausteine nutzen zu können.

Gemäß der im Anspruch 4 angegebenen Maßnahmen kann sichergestellt werden, dass die Kopien eines für die Teilprojekte benötigten Projektierungsbausteins den gleichen Ausgabestand aufweisen.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung sowie Ergänzungen und Weiterbildungen näher beschrieben und erläutert.

Es zeigen:
Figur 1 ein Engineeringsystem und
Figur 2 ein Prozessleitsystem.

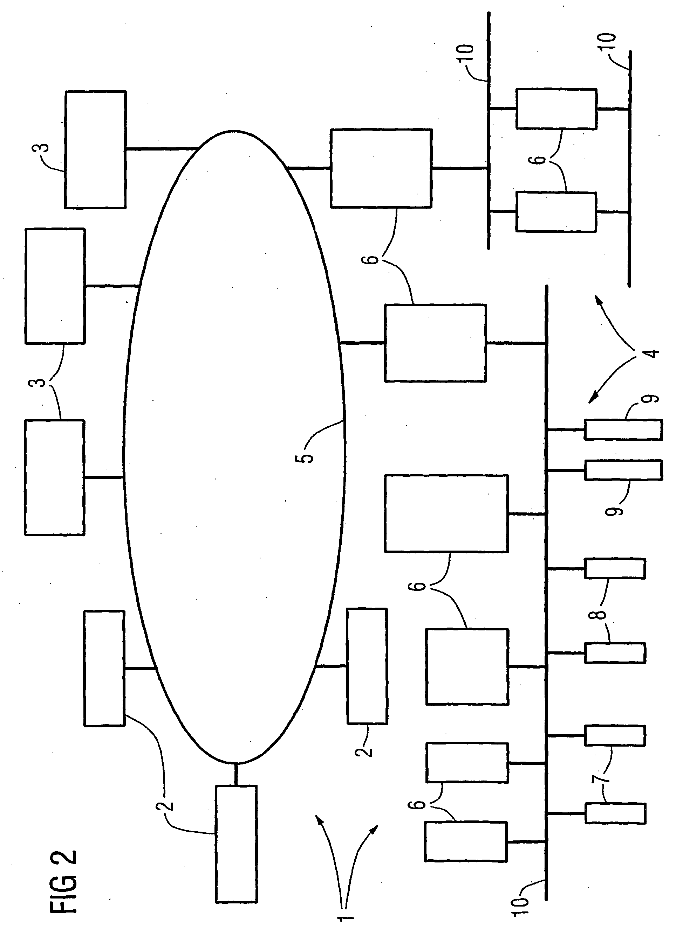

Zunächst wird auf Figur 2 verwiesen, in welcher ein an sich bekanntes Prozessleitsystem 1 dargestellt ist. Das Prozessleitsystem 1 weist ein Engineeringsystem 2, ein Bedien- und Beobachtungssystem 3 und eine projektierte und konfigurierte Automatisierungseinrichtung 4 auf, wobei das Engineeringsystem 2 zur Projektierung und/oder Konfigurierung von Automatisierungseinrichtungen vorgesehen ist. Die Automatisierungseinrichtung 4, welche über ein Bussystem 5 und hier nicht dargestellte Busanschaltungen mit dem Engineeringsystem 2 und dem Bedien- und Beobachtungssystem 3 verbunden ist, umfasst unterschiedliche Automatisierungsgeräte 6, ferner Aktoren 7 und Sensoren 8 sowie weitere zur Steuerung einer technischen Anlage erforderliche Automatisierungskomponenten 9. Die Automatisierungsgeräte 6, welche über das Bussystem 5 und/oder weitere geeignete Bussysteme 10 miteinander verbunden sind, können unterschiedlich ausgebildet sein. So sind gewöhnlich Automatisierungsgeräte zur Lösung kleiner, mittlerer und größerer Automatisierungsaufgaben innerhalb der Automatisierungseinrichtung 4 vorgesehen, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind.

Mit welchen Hard- und Softwarekomponenten, d. h. mit welchen Automatisierungsgeräten, Bedien- und Beobachtungsgeräten, Bussystemen, Aktoren und Sensoren, und mit welchen Steuerprogrammen die Automatisierungseinrichtung 4 zu versehen ist, ist abhängig von der Komplexität der zu steuernden technischen Anlage und der Steueraufgabe, wobei die erforderlichen Hard- und Softwarekomponenten der Automatisierungseinrichtung 4 durch das Engineeringsystem 2 projektierbar und/oder konfigurierbar sind.

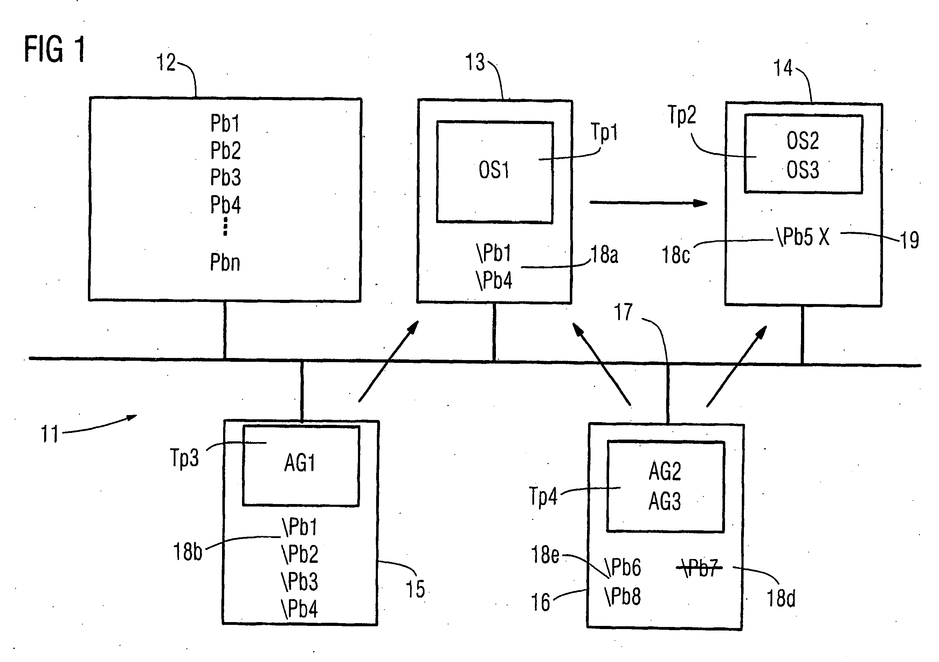

Im Folgenden wird auf Figur 1 verwiesen, in welcher ein Engineeringsystem 11 zur Projektierung und/oder Konfigurierung von Hard- und Softwarekomponenten einer Automatisierungseinrichtung dargestellt ist. Dazu weist im vorliegenden Beispiel das Engineeringsystem 11 eine Management-Einheit 12 und vier Programmiergeräte 13, 14, 15, 16 auf, wobei die Management-Einheit 12 und die Programmiergeräte 13, 14, 15, 16 über ein Bussystem 17 miteinander verbunden sind. Die Management-Einheit 12, die selbstverständlich Teil eines der Programmiergeräte 13 ... 16 sein kann, teilt ein Projekt, welches die Automatisierungseinrichtung repräsentiert und welches aufgrund der zu lösenden Automatisierungsaufgabe die Informationen über die erforderlichen Hard- und Softwarekomponenten beinhaltet, in vier Teilprojekte Tp1, Tp2, Tp3, Tp4 auf, von denen das Teilprojekt Tp1 durch das Programmiergerät 13, das Teilprojekt Tp2 durch das Programmiergerät 14 und entsprechend das Teilprojekt Tp3 durch das Programmiergerät 15 und das Teilprojekt Tp4 durch das Programmiergerät 16 zu bearbeiten ist. Dazu sind alle für die Projektierung und/oder Konfigurierung erforderlichen Hard- und Softwarekomponenten der Automatisierungseinrichtung auf Anzeigeeinrichtungen der Programmiergeräte 13 ... 16 virtuell darstellbar. Z. B. sind auf den Anzeigeeinrichtungen darstellbar die Gerätesichten von Automatisierungsgeräten, von Bedien-und Beobachtungssystemen und weiterer Hardwarekomponenten wie z. B. Ein- und Ausgabebaugruppen, von Feldgeräten, von Bussystemen sowie Sichten von Softwarebausteinen zum Erstellen von Steuerprogrammen für die Automatisierungsgeräte, wobei einem Projektierer dazu für diese Automatisierungskomponenten Projektierungsbausteine in Form von Software-Objekten in einer leittechnischen Bibliothek der Management-Einheit 12 hinterlegt sind. Das Teilprojekt Tp1 umfasst die Projektierung einer Bedien- und Beobachtungsstation OS1, das Teilprojekt Tp2 die Projektierung von Bedien- und Beobachtungsstationen OS2, OS3, das Teilprojekt Tp3 die Projektierung eines Automatisierungsgerätes AG1 und das Teilprojekt Tp4 die Projektierung von Automatisierungsgeräten AG2, AG3, wobei die Teilprojekte Tp1 und Tp3, die Teilprojekte Tp1 und Tp2 sowie die Teilprojekte Tp2 und Tp4 in Wirkverbindung stehen, was in Figur 1 durch Pfeile angedeutet ist. Z. B. stehen die Teilprojekte Tp2 und Tp4 derart in Wirkverbindung, dass Batchdaten der Automatisierungsgeräte AG2, AG3 zu den Bedien- und Beobachtungsstationen OS2, OS3 zu exportieren sind oder dass Verbindungsdaten zwischen dem Automatisierungsgerät AG1 und der Bedien- und Beobachtungsstation OS1 zu transferieren sind. In einem hier nicht dargestellten Speicher der Management-Einheit 12 sind zentral Projektierungsbausteine Pb1, Pb2, Pb3, ... Pbn in einer Bibliothek hinterlegt, die zum Projektieren und/oder Konfigurieren der Teilprojekte Tp1, ..., Tp4 auf den Programmiergeräten 13, 14, 15, 16 vorgesehen sind.
Es ist angenommen, dass ein Benutzer des Programmiergerätes 13 zur Projektierung des Teilprojektes Tp1 Kopien der Projektierungsbausteine Pb1 und Pb4, ein weiterer Benutzer des Programmiergerätes 15 Kopien der Projektierungsbausteine Pb1, Pb2, Pb3 und Pb4 zur Projektierung des Teilprojektes Tp3 benötigt. Dazu hinterlegt der Benutzer des Programmiergerätes 13 während einer Projektierungsphase mit einem geeigneten Software-Werkzeug einen Verweis 18a in einen Speicher des Programmiergerätes 13, welcher einer Software-Routine der Management-Einheit 12 anzeigt, dass auf dem Programmiergerät 13 Kopien der Projektierungsbausteine Pb1 und Pb4 zu hinterlegen sind. Die Software-Routine steht in Wirkverbindung mit dem Software-Werkzeug und kann Bestandteil dieses Software-Werkzeuges sein. Entsprechend schreibt ein Benutzer des Programmiergerätes 15 einen Verweis 18b in einen Speicher dieses Programmiergerätes 15 ein, welcher der Software-Routine der Management-Einheit 12 anzeigt, dass auf dem Programmiergerät 15 Kopien der Projektierungsbausteine Pb1, Pb2, Pb3 und Pb4 anzufertigen und im Programmiergerät 15 zu hinterlegen sind. Diese Verweise 18a, 18b liest die Software-Routine aus, welche automatisch jeweils eine Kopie der Projektierungsbausteine Pb2, Pb3 und ferner jeweils zwei Kopien der Projektierungsbausteine Pb1, Pb4 erstellt und entsprechende Kopien den Programmiergeräten 13, 15 übermittelt, welche diese Kopien in Speichern dieser Programmiergeräte 13, 15 hinterlegen.

Es kann nun vorkommen, dass auf einem Programmiergerät bereits eine Kopie eines Projektierungsbausteins abgespeichert ist und das Programmiergerät zu einer Fortsetzung der Projektierungsarbeiten an den Bus 17 angeschlossen wird. Damit diese Kopie nicht automatisch durch eine durch die Management-Einheit 12 übermittelte neue Kopie überschrieben wird, vergleicht eine Vergleichs-Routine der Programmiergeräte 13, 14, 15, 16 zunächst die Ausgabestände der von der Management-Einheit 12 übermittelten Kopien mit den Ausgabeständen der bereits hinterlegten Kopien. Im vorliegenden Beispiel ist angedeutet, dass ein auf dem Programmiergerät 14 hinterlegter Verweis 18c der Software-Routine der Management-Einheit 12 anzeigt, dass eine Kopie des Projektierungsbausteins Pb5 dem Programmiergerät 14 zu übermitteln ist, wobei eine Kennung 19 im Verweis 18c der Software-Routine anzeigt, dass diese zunächst den Ausgabestand des Projektierungsbausteins Pb5 zu übermitteln hat. Die Vergleichs-Routine des Programmiergeräts 14 vergleicht die Ausgabestände und für den Fall, dass der Ausgabestand des in der Bibliothek hinterlegten Projektierungsbausteins Pb5 jünger ist als der Ausgabestand der im Programmiergerät 14 hinterlegten Kopie, wird eine neue Kopie des Projektierungsbausteins Pb5 erstellt und die im Programmiergerät 14 hinterlegte Kopie durch die neue Kopie überschrieben. Dabei ist es erforderlich, dass der Benutzer diese neue Kopie anfordert, z. B. in der Art und Weise, dass die Vergleichs-Routine zunächst dem Benutzer auf einer Anzeigeeinheit des Programmiergerätes 14 das Vergleichsergebnis anzeigt und den Benutzer auffordert, z. B. über eine entsprechende Tastatureingabe die neue Kopie anzufordern.
Es kann vorkommen, dass Kopien eines Projektierungsbausteins auf allen Programmiergeräten den gleichen Ausgabestand aufweisen sollen. In diesem Fall ist vorgesehen, dass die Benutzeranforderung auf allen Programmiergeräten angezeigt wird, wobei eine Kopie nur dann einem Programmiergerät übermittelt wird, wenn alle Benutzer der Programmiergeräte diese Anforderung quittieren.

Es ist im Folgenden angenommen, dass auf einem Programmiergerät bereits eine Kopie eines Projektierungsbausteines abgespeichert ist und dass auf jeden Fall sichergestellt werden muss, dass diese Kopie nicht aktualisiert, d. h. nicht durch eine neue Kopie überschrieben wird. Um zu verhindern, dass diese Kopie versehentlich aktualisiert wird, ist vorgesehen, den diesem Projektierungsbaustein zugeordneten Verweis zu löschen. Im Beispiel ist angenommen, dass im Programmiergerät 16 ein Verweis 18d auf den Projektierungsbaustein Pb7 gelöscht ist, was in der Zeichnung durch das durchgestrichene Bezugszeichen Pb7 gekennzeichnet ist. Das bedeutet, dass der Benutzer des Programmiergerätes 16 zur Projektierung des Teilprojektes Tp4 mit der lokalen Kopie des Projektierungsbausteins Pb7 arbeitet und keine Aktualisierung dieser Kopie wünscht, wobei es zweckmäßig ist, den Verweis 18d bereits vor dem Verbindungsaufbau des Programmiergerätes 16 mit der Management-Einheit 12 zu löschen. Im Beispiel ist lediglich eine Aktualisierung der Kopie der Projektierungsbausteine Pb6, Pb8 auf dem Programmiergerät 16 erwünscht, was durch einen Verweis 18e der Software-Routine der Management-Einheit 12 angezeigt wird.

## Patentansprüche

1. Verfahren zum Projektieren und/oder Konfigurieren eines Projektes, welches eine Automatisierungseinrichtung (4) zum Steuern einer technischen Anlage repräsentiert, wobei
- in einem Speicher eines Engineeringsystems (2), welcher mit einem Programmiergerät (13, 14, 15, 16) des Engineeringsystems (2) verbunden ist, Projektierungsbausteine (Pb1, ..., Pbn) in einer Bibliothek hinterlegt sind,
- Kopien der für die Projektierung und/oder Konfigurierung des Projekts erforderlichen Projektierungsbausteine auf dem Programmiergerät hinterlegbar sind,
**gekennzeichnet durch** folgende Verfahrensschritte:
- es werden Verweise (18a, 18b, ..., 18e) auf dem Programmiergerät abgespeichert, die anzeigen, welche Projektierungsbausteine (Pb1, ..., Pbn) zu kopieren sind,
- gemäß den Verweisen (18a, ..., 18e) werden die Projektierungsbausteine (Pb1, ..., Pbn) automatisch kopiert und auf dem Programmiergerät (13, 14, 15, 16) hinterlegt.

2. Verfahren nach Anspruch 1, **dadurch gekennzeichnet, dass** für den Fall, dass auf dem Programmiergerät bereits Kopien hinterlegt sind, die Ausgabestände der Kopien mit den Ausgabeständen der in der Bibliothek aktuell hinterlegten Projektierungsbausteine verglichen werden, wobei Kopien aufgrund einer Benutzeranforderung durch die aktuellen Projektierungsbausteine ersetzt werden, falls die Ausgabestände der Kopien älter sind als die Ausgabestände der aktuellen Projektierungsbausteine.

3. Verfahren nach Anspruch 2, **dadurch gekennzeichnet, dass** die Verweise löschbar sind, wobei ein gelöschter Verweis bewirkt, dass die diesem Verweis zugeordnete Kopie nicht durch eine Kopie eines aktuellen Projektierungsbausteins ersetzbar ist.

4. Verfahren nach Anspruch 2 oder 3, **dadurch gekennzeichnet, dass**
- das Projekt in mehrere Teilprojekte unterteilbar ist, welche auf verschiedenen verbindbaren Programmiergeräten projektierbar sind,
- die Benutzeranforderung auf jedem Programmiergerät angezeigt wird,
- Kopien aufgrund der Benutzeranforderung durch aktuelle Projektierungsbausteine ersetzt werden, falls die Benutzeranforderung durch die Benutzer aller Programmiergeräte akzeptiert wird.

5. Engineeringsystem zum Projektieren und/oder Konfigurieren eines Projektes, welches eine Automatisierungseinrichtung (4) einer zu steuernden technischen Anlage repräsentiert, wobei
- in einem Speicher des Engineeringsystems (2), welcher mit einem Programmiergerät (13, 14, 15, 16) des Engineeringsystems (2) verbindbar ist, Projektierungsbausteine (Pb1, ..., Pbn) in einer Bibliothek hinterlegt sind,
- Kopien der für die Projektierung und/oder Konfigurierung des Projekts erforderlichen Projektierungsbausteine (Pb1, ..., Pbn) auf dem Programmiergerät (13, 14, 15, 16) hinterlegbar sind,
**dadurch gekennzeichnet, dass** das Engineeringsystem (2) mit einem Software-Werkzeug versehen ist, durch welches
- auf dem Programmiergerät (13, 14, 15, 16) Verweise (18a, 18b, ... , 18e) abgespeicher sind, die anzeigen, welche Projektierungsbausteine (Pb1, ..., Pbn) zu kopieren sind,
- gemäß den Verweisen (18a, 18b, ..., 18e) die Projektierungsbausteine (Pb1, ..., Pbn) automatisch kopiert und auf dem Programmiergerät (13, 14, 15, 16) hinterlegt sind.

6. Engineeringsystem nach Anspruch 5, **dadurch gekennzeichnet, dass** durch das Software-Werkzeug für den Fall, dass auf dem Programmiergerät bereits Kopien hinterlegt sind, die Ausgabestände der Kopien mit den Ausgabeständen der in der Bibliothek aktuell hinterlegten Projektierungsbausteine vergleichbar sind, wobei das Software-Werkzeug Kopien aufgrund einer Benutzeranforderung durch die aktuellen Projektierungsbausteine ersetzt, falls die Ausgabestände der Kopien älter sind als die Ausgabestände der aktuellen Projektierungsbausteine.

7. Engineeringsystem nach Anspruch 4, **dadurch gekennzeichnet, dass** durch das Software-Werkzeug ferner die Verweise löschbar sind, wobei ein gelöschter Verweis bewirkt, dass das Software-Werkzeug die diesem Verweis zugeordnete Kopie nicht durch eine Kopie eines aktuellen Projektierungsbausteins ersetzt.

8. Engineeringsystem nach Anspruch 4 oder 5 mit Mitteln, durch welche das Projekt in mehrere Teilprojekte unterteilbar ist, welche auf verschiedenen verbindbaren Programmiergeräten projektierbar sind, **dadurch gekennzeichnet, dass** durch das Software-Werkzeug ferner
- die Benutzeranforderung auf jedem Programmiergerät anzeigbar ist,
- Kopien aufgrund der Benutzeranforderung durch aktuelle Projektierungsbausteine ersetzbar sind, falls die Benutzeranforderung durch die Benutzer aller Programmiergeräte akzeptiert wird.

## Claims

1. Method for projecting and/or configuring a project, which represents an automation facility (4) for controlling a technical plant, where
o in a memory of an engineering system (2), connected to a programming device (13, 14, 15, 16) of the engineering system (2), planning modules (Pb1, ..., Pbn) are stored in a library,
o copies of the planning modules necessary for the project planning and/or configuring of the project can be stored on the programming device,
**characterized by** the following procedural steps:
o references (18a, 18b, ..., 18e ) are saved on the programming device, which indicate which planning modules (Pb1, ..., Pbn) should be copied,
o according to the references (18a, ..., 18e) the planning modules (Pb1, ..., Pbn) are automatically copied and stored on the programming device (13, 14, 15, 16).

2. Method according to Claim 1, **characterized in that** in the event that copies are already stored on the programming device, the revision levels of the copies are compared with the revision levels of the planning modules currently stored in the library, copies being replaced by the current planning modules on the basis of a user request if the revision levels of the copies are older than the revision levels of the current planning modules.

3. Method according to Claim 2, **characterized in that** the references can be deleted, a deleted reference having the effect that the copy assigned to this reference cannot be replaced by a copy of a current planning module.

4. Method according to Claim 2 or 3, **characterized in that**
o the project can be subdivided into several subprojects, which can be projected on various linkable programming devices,
o the user request is displayed on each programming device,
o copies are replaced by current planning modules on the basis of the user request if the user request is accepted by the users of all programming devices.

5. Engineering system for projecting and/or configuring a project, which represents an automation facility (4) of a technical plant to be controlled, where
o in a memory of the engineering system (2), connectable to a programming device (13, 14, 15, 16) of the engineering system (2), planning modules (Pb1, ..., Pbn) are stored in a library,
o copies of the planning modules (Pb1, ..., Pbn) necessary for the project planning and/or configuring of the project can be stored on the programming device (13, 14, 15, 16),
**characterized in that** the engineering system (2) is equipped with a software tool, by which
o references (18a, 18b, ..., 18e) are saved on the programming device (13, 14, 15, 16), showing which planning modules (Pb1, ..., Pbn) should be copied,
o according to the references (18a, 18b, ..., 18e) the planning modules (Pb1, .., Pbn) are automatically copied and stored on the programming device (13, 14, 15, 16).

6. Engineering system according to Claim 5, **characterized in that** in the event that copies are already stored on the programming device, the revision levels of the copies can be compared by the software tool with the revision levels of the planning modules currently stored in the library, the software tool replacing copies with the current planning modules on the basis of a user request if the revision levels of the copies are older than the revision levels of the current planning modules.

7. Engineering system according to Claim 4, **characterized in that** the references can further be deleted by the software tool, a deleted reference having the effect that the software tool does not replace the copy assigned to this reference with a copy of a current planning module.

8. Engineering system according to Claim 4 or 5 with means by which the project can be subdivided into several subprojects, which can be projected on various linkable programming devices, **characterized in that** further, by the software tool,
o the user request can be displayed on each programming device,
o copies can be replaced by current planning modules on the basis of the user request, if the user request is accepted by the users of all programming devices.

## Revendications

1. Procédé de développement et/ou de configuration d'un projet qui représente un dispositif d'automatisation (4) pour la commande d'une installation technique,
- dans lequel, dans une mémoire d'un système d'ingénierie (2) qui est reliée à un appareil de programmation (13, 14, 15, 16) du système d'ingénierie (2), des modules de développement (Pb1, ..., Pbn) sont enregistrés dans une bibliothèque,
- dans lequel des copies des modules de développement nécessaires au développement et/ou à la configuration du projet peuvent être enregistrées sur l'appareil de programmation,
**caractérisé par** les étapes de procédé suivantes :
- on mémorise sur l'appareil de programmation des références (18a, 18b, ..., 18e) qui indiquent quels modules de développement (Pb1, ..., Pbn) sont à copier,
- en fonction des références (18a, ..., 18e), on copie automatiquement les modules de développement (Pb1, ..., Pbn) et on les enregistre sur l'appareil de programmation (13, 14, 15, 16).

2. Procédé selon la revendication 1, **caractérisé par le fait que**, si des copies sont déjà enregistrées sur l'appareil de programmation, on compare les états de sortie des copies aux états de sortie des modules de développement actuellement enregistrés dans la bibliothèque, des copies étant remplacées à la demande d'un utilisateur par les modules de développement actuels si les états de sortie des copies sont plus anciens que les états de sortie des modules de développement actuels.

3. Procédé selon la revendication 2, **caractérisé par le fait que** les références sont effaçables, une référence effacée faisant en sorte que la copie associée à cette référence ne soit pas remplaçable par une copie d'un module de développement actuel.

4. Procédé selon la revendication 2 ou 3, **caractérisé par le fait que**
- le projet peut être divisé en plusieurs sous-projets qui peuvent être développés sur différents appareils de programmation pouvant être reliés,
- la demande d'utilisateur est affichée sur chaque appareil de programmation,
- des copies sont remplacées en raison de la demande d'utilisateur par des modules de développement actuels si la demande d'utilisateur est acceptée par les utilisateurs de tous les appareils de programmation.

5. Système d'ingénierie pour le développement et/ou la configuration d'un projet qui représente un dispositif d'automatisation (4) d'une installation technique à commander,
- dans lequel, dans une mémoire du système d'ingénierie (2) qui peut être reliée à un appareil de programmation (13, 14, 15, 16) du système d'ingénierie (2), des modules de développement (Pb1, ..., Pbn) sont enregistrés dans une bibliothèque,
- dans lequel des copies des modules de développement (Pb1, ..., Pbn) nécessaires au développement et/ou à la configuration du projet peuvent être enregistrées sur l'appareil de programmation (13, 14, 15, 16),
**caractérisé par le fait que** le système d'ingénierie (2) est muni d'un outil logiciel par lequel
- des références (18a, 18b, ..., 18e) qui indiquent quels modules de développement (Pb1, ..., Pbn) sont à copier sont mémorisées sur l'appareil de programmation (13, 14, 15, 16) ,
- en fonction des références (18a, 18b, ..., 18e), les modules de développement (Pb1, ..., Pbn) sont copiés automatiquement et sont enregistrés sur l'appareil de programmation (13, 14, 15, 16).

6. Système d'ingénierie selon la revendication 5, **caractérisé par le fait que**, si des copies sont déjà enregistrées sur l'appareil de programmation, l'outil logiciel peut comparer les états de sortie des copies aux états de sortie des modules de développement actuellement enregistrés dans la bibliothèque, l'outil logiciel remplaçant des copies à la demande d'un utilisateur par les modules de développement actuels si les états de sortie des copies sont plus anciens que les états de sortie des modules de développement actuels.

7. Système d'ingénierie selon la revendication 4, **caractérisé par le fait que**, en plus, l'outil logiciel peut effacer les références, une référence effacée faisant en sorte que l'outil logiciel ne remplace pas la copie associée à cette référence par une copie d'un module de développement actuel.

8. Système d'ingénierie selon la revendication 4 ou 5 avec des moyens par lesquels le projet peut être divisé en plusieurs sous-projets qui peuvent être développés sur différents appareils de programmation pouvant être reliés, **caractérisé par le fait que**, en plus,
- l'outil logiciel peut afficher la demande d'utilisateur sur chaque appareil de programmation,
- l'outil logiciel peut remplacer des copies en raison de la demande d'utilisateur par des modules de développement actuels si la demande d'utilisateur est acceptée par les utilisateurs de tous les appareils de programmation.
